# EUROPEAN PATENT SPECIFICATION

(11) **EP 1 881 767 B1**
(45) Date of publication and mention of the grant of the patent: **29.03.2017**
(21) Application number: 06770300.9
(22) Date of filing: 12.05.2006
(51) Int. Cl.: A23K 40/00, A23K 40/30, A23K 50/42

(54) **DRY FOOD COMPOSITIONS HAVING ENHANCED PALATABILITY**
TROCKENE NAHRUNGSMITTELZUSAMMENSETZUNGEN MIT VERBESSERTER SCHMACKHAFTIGKEIT
COMPOSITIONS ALIMENTAIRES SECHES AYANT UNE APPETIBILITE AMELIOREE

(30) Priority: 13.05.2005 US 680676 P
(43) Date of publication of application: 30.01.2008
(73) Proprietor: Hill's Pet Nutrition, Inc., Topeka, KS 66603 (US)
(72) Inventor: LIN, Hungwei Charlie, Lawrence, Kansas 66047 (US); MARTINEZ, Sarah Baradas, Lawrence, Kansas 66047 (US); CHINACHOTI, Pavinee, Topeka, Kansas 66615 (US)
(74) Representative: Daniels, Jeffrey Nicholas
(86) International application number: PCT/US2006/018552
(87) International publication number: WO 2006/124675

(56) References cited:
- WO-A-2006/110407
- US-A- 4 006 266
- US-A- 4 029 821
- US-A- 4 190 679
- US-A- 4 940 591
- US-A1- 2004 197 462

## Description

### BACKGROUND OF THE INVENTION

### Field of the Invention

The present invention relates generally to dry food compositions having enhanced palatability and particularly to dry food compositions having discrete pieces with different amounts of palatability enhancers.

### Description of the Prior Art

Dry foods constitute a major fraction of the diets of animals, including canines and felines. A "dry" food typically contains about 3% to about 11% by weight water and comprises, per serving, one to a multiplicity of more or less discrete pieces. Such foods are prepared in a number of forms having pieces of sizes ranging from very small to bite-size or larger.

Many dry foods comprise discrete small pieces in a size range, as measured in their longest dimension, of about 2 mm (about 1/12 inch) to about 24 mm (about 1 inch), commonly in a narrower range, for example about 5 mm to about 20 mm, or about 6 mm (about ¼ inch) to about 18 mm (about ¾ inch). The pieces, within a particular food product, can vary in size over such a range, or can be more homogeneous in size. They can be all of similar shape, or can be present in a variety of shapes. Such pieces are known by various names depending in part on the process used to prepare them, e.g., including kibbles, pellets, crumbs, granules, and bits. For example, kibbles are typically prepared by an extrusion process in which dough is formed by mixing the ingredients and cooked by steam prior to and during extrusion. The extruded ribbons of dough are cut into pieces as they emerge from the extruder die and the pieces are dried to form the kibbles.

Various materials are commonly applied to the surfaces of food compositions during or after drying. Among such materials are palatants, i.e., additives that increase palatability of a food to an animal. Manufacturing techniques for applying a palatant or other coating to kibbles are well known in the art, e.g., U.S. Patent Application Publication No. 2003/0082277. A palatant can also be added to a pre-manufactured kibble product by an end-user, e.g., as a sauce components as shown in U.S. Patent Application Publication No. 2003/0009370.

Palatants can alternatively or additionally be included in the dough or other starting material of a food composition prior to cooking. Such palatants are thereby incorporated throughout the body of the composition rather than in a surface layer. Besides coating on the surface or incorporating throughout the composition, options for adding palatant include integration into an inner or outer zone of the kibble or distribution in packets within the composition.

Even with all the options available in the art for creating food compositions containing palatants that enhance their palatability to animals, there remains a need for new methods for palatability enhancement of dry food compositions, including kibbles. Furthermore, palatant ingredients can in some cases be inimical to a particular nutritional goal. It is therefore sometimes important not to further increase the amount of palatant in a dry food composition even if such addition could bring about a substantial further improvement in palatability. Cost considerations are also a deterrent to increasing the level of palatant in a dry food composition.

US4,006,266 discloses that a dry pet food is formed by mixing a soft meat-like dry pet food and a hard dry pet food together.

### SUMMARY OF THE INVENTION

It is, therefore, an object of the present invention to provide dry food compositions having enhanced palatability.

It is another object of the present invention to provide methods for enhancing the palatability of dry food compositions.

It is another object of the invention to provide methods for producing dry food compositions having enhanced palatability.

It is a further object of the invention to decrease the amount of palatant required to produce a dry food composition having enhanced palatability.

The present invention provides a method according to claim 1 and a dry pet food composition according to claim 8.

Described are compositions which comprise one or more discrete pieces having zero to baseline palatant level and one or more discrete pieces having an enhanced palatant level compared to the pieces having zero to baseline palatant level. Described are methods which comprise providing to the animal a dry food composition comprising a mixture of one or more discrete pieces having zero to baseline palatant level and one or more discrete pieces having an enhanced palatant level compared to the pieces having zero to baseline palatant level. Kits comprising the dry food composition components and optional instructions for using such components are provided. Surprisingly, animals prefer dry food compositions comprising a mixture of pieces having different levels of palatant.

Other and further objects, features, and advantages of the present invention will be readily apparent to those skilled in the art.

### DETAILED DESCRIPTION OF THE INVENTION

### Definitions

The term "palatability" means a relative preference of an animal for one food composition over another. Palatability may be determined by a standardized testing protocol in which the animal has equal access to both compositions. Such preference can arise from any of the animal's senses but typically is a function predominantly of taste and/or aroma. A composition stated herein to have "enhanced palatability" is one for which an animal exhibits preference relative to a control composition.

The term "palatant" or "palatability enhancer" means any material that enhances the palatability of a food composition to an animal. A palatant or palatability enhancer can be a single material or a mixture of materials and can be a natural (either unprocessed or processed), synthetic, or part natural and part synthetic material. A palatant can be added to a food composition as an additive that comprises the palatant or that comprises the palatant together with one or more other functional or non-functional materials.

The term "companion animal" means an individual animal of any species kept by a human caregiver as a pet, or any individual animal of a variety of species that have been widely domesticated as pets, including dogs *(Canis familiaris)* and cats *(Felis domesticus),* whether or not the individual animal is kept solely or partly for companionship. Thus "companion animals" herein include working dogs, farm cats kept for rodent control, *etc*., as well as pet dogs and cats.

The term "nutritionally complete diet" means a diet that includes sufficient nutrients for maintenance of normal health of a healthy animal on the diet.

The term "single package" means that the components of a kit are physically associated in or with one or more containers and considered a unit for manufacture, distribution, sale, or use. Containers include, but are not limited to, bags, boxes, bottles, shrink wrap packages, stapled or otherwise affixed components, or combinations thereof. A single package may be containers of individual food compositions physically associated such that they are considered a unit for manufacture, distribution, sale, or use.

The term "virtual package" means that the components of a kit are associated by directions on one or more physical or virtual kit components instructing the user how to obtain the other components, e.g., in a bag containing one component and directions instructing the user to go to a website, contact a recorded message, view a visual message, or contact a caregiver or instructor to obtain instructions on how to use the kit.

### Detailed Description

The present disclosure provides dry food compositions having enhanced palatability. The compositions comprise one or more pieces having zero to baseline palatant level and one or more pieces having an enhanced palatant level compared to the pieces having zero to baseline palatant level. The invention is based upon a surprising discovery of a new way to enhance palatability of dry food compositions without increasing the total amount of palatant in the composition and a new way to provide dry food compositions having acceptable palatability while decreasing the total amount of palatant in the composition. Typical dry food compositions comprise discrete pieces having no or substantially the same amount of palatability enhancers in the pieces. In the present invention, the dry food compositions are a mixture of pieces having different amounts or levels of palatability enhancers. Surprisingly, animals consuming such dry food compositions find the mixture significantly more palatable than the corresponding typical dry food compositions having substantially the same amount of palatability enhancers evenly distributed in the pieces. The enhanced palatability of the dry food compositions of the present invention not only increases the likelihood that an animal will consume the compositions but also increases the ingestion frequency and ingestion rate of the composition.

The dry food compositions of the present disclosure can be made by taking a portion of typical dry food composition containing no or a certain amount of palatability enhancer and mixing it with a portion of the same dry food composition that has been made with an increased amount of palatability enhancer. The dry food compositions of the present disclosure can also be made by taking a portion of typical dry food composition containing a certain amount of palatability enhancer and mixing it with a portion of the same dry food composition that has been made with a reduced amount of palatability enhancer. This embodiment permits the use of less total palatability enhancer in a given amount of food composition when compared to the amount of palatability enhancer used in known dry food compositions.

The dry food compositions may comprise pieces having different amounts of substantially the same type of palatability enhancer or may comprise pieces having different types of palatability enhancers. In one embodiment, the pieces have two or more different flavors.

The present disclosure also provides methods for enhancing palatability of a dry food composition to an animal. The methods comprise forming a mixture of one or more pieces having zero to baseline palatant level and one or more pieces having an enhanced palatant level compared to the pieces having zero to baseline palatant level.

The present disclosure additionally provides methods for increasing the ingestion frequency or the ingestion rate of a dry food composition. The method comprises feeding an animal a composition comprising one or more pieces having zero to baseline palatant level and one or more pieces having an enhanced palatant level compared to the pieces having zero to baseline palatant level.

The present invention generally relates to methods for manufacturing a dry food composition having enhanced palatability. Described is a method which comprises adding a palatability enhancer to one or more pieces having zero to baseline palatant level to produce one or more dry food composition pieces having an enhanced palatant level compared to the pieces having zero to baseline palatant level and mixing pieces having the enhanced palatant level with pieces having zero to baseline palatant level to produce a dry food composition having enhanced palatability compared to a dry food composition containing only pieces having zero to baseline palatant level.

The present disclosure additionally provides a kit comprising in separate containers in a single package pieces of a dry food composition having zero to baseline palatant level and pieces of a dry food composition having an enhanced palatant level compared to the pieces having zero to baseline palatant level. In some embodiments, the kit further comprises in separate containers in a single package or in separate containers in a virtual package one or more of (1) instructions for how to combine pieces of a dry food composition having zero to baseline palatant level with pieces of a dry food composition having an enhanced palatant level compared to the baseline palatant to produce a dry food composition mixture having enhanced palatability to an animal, (2) instructions for how to use or consume the dry food compositions of the present invention, particularly for the benefit of the animal, and (3) a gastrointestinal tract improving agent selected from the group consisting of probiotics and prebiotics. When the kit comprises a virtual package, the kit is limited to the instructions in a virtual environment in combination with one or more of the other physical kit components.

The instructions can be communicated using any suitable means for communicating instructions such as a document, label, brochure, advertisement or package insert, a computer-readable digital or optical medium such as a diskette or CD, an audio presentation such as an audiotape or CD, or a visual presentation such as a videotape or DVD. The communicating means can refer to further information located elsewhere, such as on a website.

In one embodiment, the consumer purchases a kit comprising the pieces containing the enhanced palatant level, the pieces containing the zero to baseline palatant level, and the instructions on how to use such pieces according to the instructions to produce a dry food composition mixture having enhanced palatability. In preferred methods, the instructions are included in the kit as a package insert or are attached to or printed on the package containing one of the dry food compositions. However, the instructions may be included in the kit on an audio tape, video tape, or similar method. In another, the consumer purchases a kit comprising the pieces containing the enhanced palatant level and the pieces containing the zero to baseline palatant level. The instructions are made available via consumer education programs, brochures, the internet, audio media, video media, telephone media, and the like. In a further, the consumer purchases a kit comprising the pieces containing the enhanced palatant level and the instructions and uses such pieces according to the instructions in combination with a zero to baseline palatant level dry food composition that was purchased separately to produce a dry food composition mixture having enhanced palatability. All kits may contain additional items such as animal food treats, promotional toys, coupons, and the like. In another, the consumer purchases a virtual kit comprising the pieces containing the enhanced palatant level and directions on how to obtain instructions for how to combine pieces of a dry food composition having zero to baseline palatant level with pieces of a dry food composition having an enhanced palatant level compared to the baseline palatant to produce a dry food composition mixture having enhanced palatability to an animal.

In another embodiment, the kit contains different types or kinds of pieces containing the enhanced palatant level or pieces containing the zero to baseline palatant level in separate packages, e.g., pieces having different flavors in separate packages.

The present disclosure also provides a kit comprising in separate containers in a single package or in separate containers in a virtual package one or more palatability enhancers and instructions describing how to apply the palatability enhancer to one or more pieces having zero to baseline palatant level to produce one or more dry food composition pieces having an enhanced palatant level compared to the pieces having zero to baseline palatant level and mix pieces having the enhanced palatant level with pieces having zero to baseline palatant level to manufacture a dry food composition having enhanced palatability compared to a dry food composition having only pieces having zero to baseline palatant level. When the kit comprises a virtual package, the kit is limited to instructions in a virtual environment in combination with one or more palatability enhancers. In one embodiment, the kit comprises a liquid or sauce palatability enhancer and instructions on how to apply such liquid or sauce to pieces having zero to baseline palatant level to produce pieces having an enhanced palatant level compared to the pieces having zero to baseline palatant level and how to mix the resulting pieces with pieces having zero to baseline palatant level to produce a dry food composition having enhanced palatability according to the present invention.

The present disclosure also provides dry food compositions for animal consumption having enhanced palatability and a beneficial effect on the gastrointestinal tract. The compositions comprise one or more pieces having zero to baseline palatant level, one or more pieces having an enhanced palatant level compared to the pieces having zero to baseline palatant level, and a gastrointestinal tract improving agent selected from the group consisting of probiotics and prebiotics. Probiotics are live microorganisms that have a beneficial effect in the prevention and treatment of specific medical conditions when ingested. Probiotics are believed to exert biological effects through a phenomenon known as colonization resistance. The probiotics facilitate a process whereby the indigenous anaerobic flora limits the concentration of potentially harmful (mostly aerobic) bacteria in the digestive tract. Other modes of action, such as supplying enzymes or influencing enzyme activity in the gastrointestinal tract, may also account for some of the other functions that have been attributed to probiotics. Prebiotics are nondigestible food ingredients that beneficially affect host health by selectively stimulating the growth and/or activity of bacteria in the colon. The prebiotic, fructooligosaccharide (FOS) is found naturally in many foods such as wheat, onions, bananas, honey, garlic, and leeks. FOS can also be isolated from chicory root or synthesized enzymatically from sucrose. FOS fermentation in the colon results in a large number of physiologic effects including increasing the numbers of bifidobacteria in the colon, increasing calcium absorption, increasing fecal weight, shortening of gastrointestinal transit time, and possibly lowering blood lipid levels. The increase in bifidobacteria has been assumed to benefit human health by producing compounds to inhibit potential pathogens, by reducing blood ammonia levels, and by producing vitamins and digestive enzymes. Probiotic bacteria such as Lactobacilli or Bifidobacteria are believed to positively affect the immune response by improving the intestinal microbial balance leading to enhanced antibody production and phagocytic (devouring or killing) activity of white blood cells. Bifidobacterium lactis could be an effective probiotic dietary supplement for enhancing some aspects of cellular immunity in the elderly. Probiotics enhance systemic cellular immune responses and may be useful as a dietary supplement to boost natural immunity in otherwise healthy adults. Probiotics include many types of bacteria but generally are selected from four genera of bacteria: Lactobacilllus acidophillus, Bifidobacteria, Lactococcus, and Pediococcus. The amount of probiotics and prebiotics to be administered to the animal is determined by the skilled artisan based upon the type and nature of the prebiotic and probiotic and the type and nature of the animal, e.g., the age, weight, general health, sex, extent of microbial depletion, presence of harmful bacteria, and diet of the animal. Generally, probiotics are administered to the animal in amounts of from about one to about twenty billion colony forming units (CFUs) per day for the healthy maintenance of intestinal microflora, preferably from about 5 billion to about 10 billion live bacteria per day. Generally, prebiotics are administered in amounts sufficient to positively stimulate the healthy microflora in the gut and cause these "good" bacteria to reproduce. Typical amounts are from about one to about 10 grams per serving or from about 5 percent to about 40 percent of the recommended daily dietary fiber for an animal. The probiotics and prebiotics can be made part of the composition by any suitable means. Generally, the agents are mixed with the composition or applied to the surface of the composition, e.g., by sprinkling. When the agents are part of a kit, the agents can be admixed with other materials or in their own package.

The present disclosure further provides a dry food composition that comprises a multiplicity of discrete pieces per serving and contains one or more palatants in a given total amount. The improvement according to this embodiment comprises distributing the given total amount of the one or more palatants unevenly among the pieces wherein a first portion of the pieces has a zero to baseline palatant level and a second portion of the pieces has one or more palatants at an elevated level when compared to the zero to baseline palatant level.

When an animal consumes a composition of the disclosure, the animal typically takes into its mouth a plurality of pieces. Such compositions include, without restriction, those known in the art as kibbles, pellets, crumbs, granules and bits, and mixtures thereof. The invention is described herein with particular reference to kibbles but it is understood that other composition forms having a multiplicity of discrete pieces per serving can be substituted if desired. The pieces, e.g., kibbles, typically have a mean size of about 2 mm to about 24 mm, more typically about 5 mm to about 20 mm, as measured in their longest dimension. In various embodiments the pieces have a mean size of about 6 mm (about ¼ inch), about 9 mm (about 3/8 inch), about 12 mm (about ½ inch), about 15 mm (about 5/8 inch) or about 18 mm (about ¼ inch). An example of another composition included in the present disclosure is the multicomponent pet food forms or products disclosed in US Patent Nos. 6,117,477, 6,254,910, and 6,312,746.

The first portion of the pieces in a composition of the disclosure, if described herein as having a "baseline" palatant level, comprise an amount of one or more palatants that is greater than zero but below an optimum level for palatability to the animal species for which the food composition is intended. If the palatant level is raised above the "baseline," palatability is enhanced. In some embodiments, the palatant level of the first portion of pieces is zero, or effectively zero, *i.e*., so low that no effect on palatability can be observed. The first portion of pieces herein is sometimes referred to as the "zero to baseline palatant" pieces.

The second portion of the pieces in a composition of the disclosure, described herein as comprising an "elevated" level of one or more palatants, has an amount of such palatants effective to enhance palatability at least by comparison with the baseline level. The one or more palatants in the pieces having an elevated level can be qualitatively different from the one or more palatants in the pieces having a baseline level. Also, they can be the same one or more palatants present at a higher concentration or (where two or more palatants are present) in a different ratio. The second portion of pieces herein is sometimes referred to as the "elevated palatant" pieces.

The composition comprises at least one kind of "zero to baseline palatant" pieces and at least one kind of "elevated palatant" pieces. For example, the "elevated palatant" pieces can be of one kind, *i.e*., all of substantially similar composition and flavor, or of two or more types, e.g., having different flavors.

In certain embodiments, the second portion of the pieces in the composition has an amount of one or more palatants effective to enhance palatability of the whole composition by comparison with an otherwise similar composition having the same total amount of such palatants but distributed substantially uniformly among all of the pieces.

Examples of suitable palatants for canine and feline foods include, without restriction, animal tissue digests, hydrolyzed proteins including hydrolyzed vegetable proteins, hydrolyzed animal proteins and mixtures thereof, reaction flavors, synthetic flavors, organic and inorganic acids and salts thereof, herbs and spices, yeasts, and mixtures thereof.

In one embodiment, the one or more palatants in the second portion comprise a hydrolyzed vegetable or animal protein. In another, the one or more palatants in the second portion comprise a reaction flavor based on beef, liver, lamb, chicken or seafood.

In various embodiments, the "elevated" level of the one or more palatants in the pieces of the second portion is at least about twice, at least about 3 times, at least about 4 times, at least about 5 times or at least about 10 times, a "baseline" level found in the pieces of the first portion. It will be understood, however, that as different palatants vary in their impact on palatability to a particular species of companion animal, an "elevated" level of palatant can be provided by a relatively small amount of a palatant selected for greater impact on palatability.

Illustratively, as described herein, "zero to baseline palatant" pieces contain 0% to about 10%, for example about 1% to about 5%, or about 1.5% to about 3%, total palatant; and "elevated palatant" pieces can contain about 0.5% to about 30%, for example about 2% to about 20%, about 3% to about 15%, or about 5% to about 15%, total palatant. "Baseline" and "elevated" palatant levels herein relate to averages of the pieces of the first and second portions respectively. Individual pieces can have palatant levels that are substantially above or below these averages. The method according to the invention makes use of one or more pieces containing from 0% to 3% total palatant and one or more pieces containing from 5% to 20% total palatant.

In one embodiment, the first portion comprises a majority and the second portion a minority of all the pieces in the composition. Unless otherwise specified herein, the terms "majority" and "minority", and related terms such as "major" and "minor" amounts, are to be understood as by weight rather than by number. According to this embodiment, the minority of pieces that have an elevated level of one or more palatants typically constitute at least about 0.5%, for example about 0.5% to about 40%, by weight of the composition as a whole. The minority of pieces can illustratively constitute about 1%, about 2%, about 5%, about 10%, about 15%, about 20%, about 25%, about 30% or about 40% by weight of the composition as a whole. In most cases, a satisfactory result will be obtained by using about 5% to about 40%, for example about 5% to about 30%, about 5% to about 25% or about 5% to about 20%, by weight of pieces having the elevated palatability level.

It will be understood that an inverse relationship exists between a desirable proportion of "elevated palatant" to "zero to baseline palatant" pieces in the composition, and a desirable palatant level in the "elevated palatant" pieces. Thus, for example, where the "elevated palatant" pieces constitute a relatively high proportion (*e*.*g*., about 20% to about 40% or higher) by weight of the composition as a whole, a satisfactory result can be obtained with a relatively low palatant level in these pieces. Conversely, where a relatively high palatant level is used in the "elevated palatant" pieces, the proportion of such pieces in the composition as a whole can be relatively small (*e*.*g*., about 1% to about 10% by weight).

In the "elevated palatant" pieces, one or more palatant materials can be present in the interior of each piece, *e*.*g*., incorporated throughout, in an internal zone, or present in packets within each piece. Alternatively, these materials can be present mainly or exclusively in a surface layer, for example a coating, on each piece. It will generally be found that placement of the palatant material(s) on surfaces of pieces, for example by any spraying or coating procedure, is a very efficient way to provide a high degree of palatability enhancement with a relatively small amount of palatant. The amount of palatant(s) added as a surface coating to a piece such as a kibble will depend on a number of factors, including the nature of the palatant(s). Methods of coating pieces such as kibbles with a palatant material are well known in the art, as are methods of mixing two or more types of kibble.

There is substantially no difference in formula between the "zero to baseline palatant" pieces and the "elevated palatant" pieces except for the level of palatant present. According to one aspect of this embodiment, not only the formula but also the form, including size, shape, color and surface texture, of the "zero to baseline palatant" pieces and the "elevated palatant" pieces are substantially indistinguishable visually to an animal receiving a serving of the composition. In another, the "elevated palatant" pieces are distinguishable visually from the "zero to baseline palatant" pieces, for example by size, shape, color or surface texture. Providing visually distinguishable "elevated palatant" pieces can render these more appealing to the animal, particularly where their palatant level is not highly elevated, and/or where at least some of these pieces have a shape that the animal associates with a known treat, for example a bone shape where the animal is a dog. Such visually distinguishable pieces can also be useful to a person feeding the animal as an indication that both types of pieces are present and in approximately the desired proportion.

The animal for which a dry food of the disclosure is suitable can be human or non-human. In various embodiments, the subject animal is a vertebrate, for example a fish, a bird, a reptile or a mammal. Illustratively among mammals, the animal can be a member of the order Carnivora, including without limitation canine and feline species. According to the invention, the animal is a companion animal.

Where the animal is a companion animal, a dry food composition of the disclosure is typically one that is nutritionally adapted for feeding to such an animal. A food composition so adapted is referred to herein as a "pet food". Pet foods can be more particularly adapted to the special nutritional needs of a specific animal species and/or to one or more breeds or breed types within a species and/or to one or more age groups of companion animal. Such adaptation can be in the nutritional formula of the food and/or in the selection of palatant(s) used. In one embodiment, the food is a feline food. In another embodiment, the food is a canine food. In some embodiments, the food is adapted for small breed or large breed dogs. The food can be adapted for feeding to growing animals (e.g., kittens or puppies), to adult felines or canines, to mature felines or canines, to aged felines or canines, or to geriatric felines or canines. The food can be adapted for feeding to animals with particular dietary needs, as in the case, for example, of canines having degenerative bone or joint conditions or felines with renal insufficiency.

In one embodiment, the food composition provides a substantially nutritionally complete diet for an animal. In another, the dry food composition is a supplement, i.e., a food composition used with another food composition to improve the nutritive balance or performance of the diet as a whole. Such supplements include compositions that are fed undiluted as a supplement to other foods, offered free choice with other parts of an animal's ration that are separately available to the animal, or diluted and mixed with an animal's regular food to produce a substantially nutritionally complete diet.

The compositions, methods, and kits of the disclosure are useful for any animal but are especially useful for animals exhibiting depressed appetite and/or excessive fastidiousness, finickiness, or discrimination in selecting food for consumption. Without limitation, the method is useful where an animal is being subjected to a change in diet for health or other reasons and/or where an animal's eating habits are affected by a change of environment or other stress. Even where an animal's food consumption is adequate for good nutrition, the invention is beneficial to make the food as appetizing as possible and promote the general wellbeing of the animal and foster a bond between the animal and its caregiver.

Formation of the mixture of "zero to baseline palatant" and "elevated palatant" pieces can occur as part of a commercial manufacturing process. Optionally, such a process can further comprise packaging the mixture in a container, e.g., a bag or box. A label can be provided in, on or in conjunction with the container, carrying nutritional and/or other information relating to the mixture.

Alternatively, formation of the mixture can occur at retail level, for example at point of retail purchase. Optionally, the mixture can be custom prepared based on an individual purchaser's wishes or needs. For example, a retail store can carry separate stocks of "zero to baseline palatant" pieces and one to a plurality of different types of "elevated palatant" pieces, for example, containing different palatants to appeal to a wide range of animals. Based on a purchaser's input, made for example at a user interface such as a keyboard, touch-tone telephone or touch-screen video terminal, a mixture of "zero to baseline palatant" and "elevated palatant" pieces in a desired proportion can be created.

As yet another alternative, an end-user can prepare the mixture from separate stocks of "zero to baseline palatant" and "elevated palatant" pieces. For example, the mixture can be prepared at home, prior to (for example immediately prior to) presenting the mixture to the animal. In this embodiment, it is generally advantageous to provide "elevated palatant" pieces that are visually distinguishable from the "zero to baseline palatant" pieces. The separate stocks can be purchased individually or as components of a kit that optionally further comprises a set of instructions to the end-user to mix "elevated palatant" pieces with "zero to baseline palatant" pieces in a suitable proportion. The instructions can specify a range of suitable proportions for different situations.

In an embodiment , a mixture of a first portion of "elevated palatant" pieces and a second portion of "zero to baseline palatant" pieces is found more palatable by an animal than an otherwise similar composition having the same total amount of palatant substantially evenly distributed among the pieces.

The present disclosure also provides a means for communicating information about or instructions for manufacturing or using dry food compositions having enhanced palatability to an animal. The communicating means comprises a document, digital storage media, optical storage media, audio presentation, visual display, or combinations thereof containing the information or instructions. Preferably, the communication is a displayed web site or a brochure, product label, package insert, advertisement, or visual display containing such information or instructions. Useful information includes one or more of (1) methods and techniques for combining manufacturing and combining the dry food composition pieces to produce the dry food compositions having enhanced palatability of the present invention, (2) information for using the dry food compositions, (3) details about the side effects, if any, of the palatants and the levels thereof used in the present inventions, and (4) contact information for consumers to use if they have a question about the invention and its use. Useful instructions include consumption amounts and frequency. The communication means is useful for instructing a consumer on the benefits of using the present invention and communicating the approved methods for consuming the invention.

### EXAMPLES

The invention can be further illustrated by the following examples of preferred embodiments thereof, although it will be understood that these examples are included merely for purposes of illustration and are not intended to limit the scope of the invention unless otherwise specifically indicated.

### Example 1

Twenty-five (25) dogs were offered two dry kibble foods that were each prepared from a commercial dog food product (Hill's Prescription Diet®, Canine r/d® formula). Process flavor (PF) was topically added by coating the kibbles in an amount of 0.5% by weight of the food, either uniformly to all kibbles (comparative food) or selectively to "elevated palatant" or "EP" kibbles constituting only 5% by weight of all kibbles (test food). The "EP" kibbles in the test food thus contained 10% PF. The remaining 95% by weight of the test food consisted of "base kibbles" having no PF but having the same levels of other palatants as the control food. "EP" and base kibbles were mixed using a mechanical mixing drum.

An intake ratio (IR), defined as the average ratio of test food ingested to total food ingested, was determined. Each animal received a pre-weighed food dish containing the test food and, simultaneously, a pre-weighed food dish containing the control food. The food dishes were left with the animal for 1 hour, at the end of which the food dishes were removed and reweighed to determine intake ratio using the formula: IR = A/(A+B) where A is the amount of the test food consumed by the animal and B is the amount of the control food consumed by the animal. Results are shown in Table 1.

The term "preference" or "preferred" for a particular food means that an animal consumed more of the preferred food than a control food. Whether a food is preferred by an animal is calculated as follows: For each animal in a test for preference, calculate the weight of test food consumed (WT) and the weight of control food consumed (WC). If WT < WC, preference is for the control food. If WT > WC, preference is for the test food. If WT = WC, then in no preference for either food. The percent preference is determined by recording the number of animals in the test (PTOT), the number of animals preferring test food (PT), the number of animals preferring control food (PC), and the number showing no preference (PO) and calculating the percent preference using the following formula: Preference (%) = (PT/PTOT)100.

**Table 1**

| Test food | Control food | Preference (%) | IR |
|---|---|---|---|
| 5% "EP" kibble, 95% base kibble; 0.5% PF, all on "EP" kibble | 100% base kibble; 0.5% PF, uniformly applied to all kibble | 85 | 0.80 |

This study showed that a small portion of highly flavored kibbles, in this case just 5%, can act as appetizing "seeds" to enhance palatability of the overall food, without increasing the total amount of palatant in the food.

### Example 2

"EP" kibbles were added in an amount of 5% by weight to various commercial dog foods by a similar process to that used in Example 1. Palatability to dogs of the resulting test foods was compared with a control food (the commercial dog food with no added "EP" kibbles) in the same way as in Example 1. Commercial dog foods included in the study were (A) Hill's Science Diet® Light Adult formula; (B) Hill's Prescription Diet® Canine r/d® formula; and (C) Hill's Prescription Diet® Canine w/d® formula. Palatants added to the "EP" kibbles by coating were PF or equivalent commercial flavors (ECF), in both cases at 10% by weight of the "EP" kibbles, therefore 0.5% by weight of the food as a whole. Results are shown in Table 2.

**Table 2**

| Test food | Control food | Preference (%) | IR |
|---|---|---|---|
| (A) + PF | (A) | 88 | 0.74 |
| (A) + ECF | (A) | 67 | 0.67 |
| (B) + PF | (B) | 82 | 0.73 |
| (B) + ECF | (B) | 75 | 0.64 |
| (C) + PF | (C) | 88 | 0.76 |
| (C) + ECF | (C) | 76 | 0.68 |

### Example 3

"EP" kibbles containing 10% PF were added in an amount of 5%, 10% or 15% by weight to Hill's Prescription Diet® Canine r/d® formula dog food (B) by a similar process to that used in Example 1. In addition, "EP" kibbles containing 15% PF in a coating were added in an amount of 15% to the dog food. Palatability to dogs of the resulting test foods was compared with the commercial dog food with no added "EP" kibbles, in the same way as in Example 1. Results are shown in Table 3.

**Table 3**

| Test food | Control food | Preference (%) | IR |
|---|---|---|---|
| (B) + 5% "EP" kibbles having 10% PF | (B) | 100 | 0.84 |
| (B) + 10% "EP" kibbles having 10% PF | (B) | 90 | 0.80 |
| (B) + 15% "EP" kibbles having 10% PF | (B) | 100 | 0.86 |
| (B) + 15% "EP" kibbles having 15% PF | (B) | 100 | 0.93 |

### Example 4

"EP" kibbles were added in an amount of 5% by weight to various commercial dog foods by a similar process to that used in Example 1. Palatability to dogs of the resulting test foods was compared with a control food (the commercial dog food with no added "EP" kibbles) in the same way as in Example 1. Commercial dog foods included in the study were (A) Hill's Science Diet® Light Adult formula; (B) Hill's Prescription Diet® Canine r/d® formula; (C) Hill's Prescription Diet® Canine w/d® formula; and (D) Hill's Science Diet® Adult Original formula. PF was added by coating to the "EP" kibbles at 10% by weight of the "EP" kibbles, therefore 0.5% by weight of the food as a whole. Results are shown in Table 4.

**Table 4**

| Test food | Control food | Preference (%) | IR |
|---|---|---|---|
| (A) + PF | (A) | 80 | 0.72 |
| (B) + PF | (B) | 91 | 0.80 |
| (C) + PF | (C) | 92 | 0.80 |
| (D) + PF | (D) | 80 | 0.73 |

### Example 5

"EP" kibbles were added in an amount of 10% by weight to a commercial dry cat food (E): Hill's Prescription Diet® Feline r/d® formula, by a similar process to that used in Example 1. Palatability to cats of the resulting test foods was compared with a control food (the commercial cat food (E) with no added "EP" kibbles, except where indicated below) in the same way as in Example 1. Palatant (PF or seafood reaction flavor, SRF) was added by coating to the "EP" kibbles at 3% to 15% by weight of the "EP" kibbles, as detailed below. Results are shown in Table 5.

**Table 5**

| Test food | Control food | Preference (%) | IR |
|---|---|---|---|
| (E) + 10% "EP" kibbles having 3% PF | (E) | 78 | 0.68 |
| (E) + 10% "EP" kibbles having 6% PF | (E) | 74 | 0.65 |
| (E) + 10% "EP" kibbles having 9% PF | (E) | 58 | 0.57 |
| (E) + 10% "EP" kibbles having 12% PF | (E) | 84 | 0.65 |
| (E) + 10% "EP" kibbles having 15% PF | (E) | 60 | 0.67 |
| (E) + 5% "EP" kibbles having 10% SRF | Purina® OM Feline | 80 | 0.71 |
| (E) + 5% "EP" kibbles having 10% SRF | Iams® Feline Adult Weight Control | 84 | 0.73 |

As used herein and in the appended claims, the singular forms "a," "an," and "the" include plural reference unless the context clearly dictates otherwise, e.g., reference to "a palatant" includes a plurality of such palatants or reference to pieces includes a single piece. The words "comprise", "comprises", and "comprising" are to be interpreted inclusively rather than exclusively.

Unless defined otherwise, all technical and scientific terms and any acronyms used herein have the same meanings as commonly understood by one of ordinary skill in the art in the field of the invention.

In the specification, there have been disclosed typical preferred embodiments of the invention and, although specific terms are employed, they are used in a generic and descriptive sense only and not for purposes of limitation, the scope of the invention being set forth in the following claims.

## Claims

1. A method for manufacturing a dry pet food composition having enhanced palatability to an animal, which method comprises:
adding a palatant to one or more pieces containing from 0 % to 3 % total palatant to produce one or more pieces containing from 5 % to 20 % total palatant;
forming a mixture of one or more pieces containing from 0 % to 3 % total palatant and the one or more pieces containing from 5 % to 20 % total palatant;
wherein the pieces containing from 5 % to 20 % total palatant constitute from 0.1 % to 40 % by weight of the pieces in the composition;
wherein the pieces in the dry food composition have the same composition except for the amount of palatant contained therein;
and wherein the palatants are selected from reaction flavors, synthetic flavors, organic and inorganic acids and salts thereof, hydrolysed vegetable proteins, hydrolysed animal proteins, animal tissue digests, herbs and spices, yeasts, and mixtures thereof.

2. The method of claim 1, further comprising packaging the mixture in a container.

3. The method according to claim 1, wherein the composition includes a probiotic or a prebiotic.

4. The method according to claim 1, wherein the palatant is disposed on surfaces of the pieces.

5. The method according to claim 1, wherein the pieces are kibbles.

6. The method according to claim 1, wherein the animal is a canine or a feline.

7. The method according to claim 1, wherein the one or more pieces containing from 0 % to 3 % total palatant have a different size, shape, colour, or surface texture to the one or more pieces containing from 5 % to 20 % total palatant.

8. A dry pet food composition obtainable by the method of any preceding claim.

## Patentansprüche

1. Verfahren zur Herstellung einer trockenen Haustierfutterzusammensetzung mit verbesserter Schmackhaftigkeit für ein Tier, wobei das Verfahren Folgendes umfasst:
Zugeben eines Geschmacksträgers zu einem oder mehreren Stücken, die von insgesamt 0 % bis 3 % Geschmacksträger enthalten, um ein oder mehrere Stücke zu produzieren, die von insgesamt 5 % bis 20 % Geschmacksträger enthalten;
Bilden eines Gemischs von einem oder mehreren Stücken, die von insgesamt 0 % bis 3 % Geschmacksträger enthalten, und dem einen oder den mehrere Stücken, die von insgesamt 5 % bis 20 % Geschmacksträger enthalten;
wobei die Stücke, die von insgesamt 5 % bis 20 % Geschmacksträger enthalten, von 0,1 Gew.-% bis 40 Gew.-% der Stücke in der Zusammensetzung ausmachen;
wobei die Stücke in der trockenen Futterzusammensetzung dieselbe Zusammensetzung haben, mit Ausnahme der darin enthaltenen Geschmacksträgermenge;
und wobei die Geschmacksträger aus Reaktionsaromen, synthetischen Aromen, organischen und anorganischen Säuren und Salzen davon, hydrolysierten pflanzlichen Proteinen, hydrolysierten tierischen Proteinen, Tiergewebeextrakten, Kräutern und Gewürzen, Hefen und Gemischen davon ausgewählt sind.

2. Verfahren nach Anspruch 1, das weiterhin das Verpacken des Gemischs in einen Behälter umfasst.

3. Verfahren nach Anspruch 1, wobei die Zusammensetzung ein Probiotikum oder ein Präbiotikum enthält.

4. Verfahren nach Anspruch 1, wobei der Geschmacksträger auf Oberflächen der Stücke angeordnet wird.

5. Verfahren nach Anspruch 1, wobei die Stücke Kroketten sind.

6. Verfahren nach Anspruch 1, wobei das Tier ein Hund oder eine Katze ist.

7. Verfahren nach Anspruch 1, wobei das eine oder die mehreren Stücke, die von insgesamt 0 % bis 3 % Geschmacksträger enthalten, eine zu dem einen oder den mehreren Stücken, die von insgesamt 5 % bis 20 % Geschmacksträger enthalten, unterschiedliche Größe, Form, Farbe oder Oberflächentextur aufweisen.

8. Trockene Haustierfutterzusammensetzung, die durch das Verfahren nach einem vorhergehenden Anspruch erhaltbar ist.

## Revendications

1. Un procédé de fabrication d'une composition alimentaire sèche pour animaux de compagnie ayant un niveau de palatabilité améliorée pour un animal, lequel procédé consiste à :
ajouter un agent de palatabilité à un ou plusieurs morceaux contenant entre 0 % et 3 %, d'agent de palatabilité en tout afin de produire un ou plusieurs morceaux contenant entre 5 % et 20 % d'agent de palatabilité en tout ;
former un mélange d'un ou plusieurs morceaux contenant entre 0 % et 3 % d'agent de palatabilité en tout et du ou des morceaux contenant entre 5 % et 20 % d'agent de palatabilité en tout ;
dans lequel les morceaux contenant entre 5 % et 20 % d'agent de palatabilité en tout constituent entre 0,1 % et 40 % en poids des morceaux de la composition ;
dans lequel les morceaux de la composition alimentaire sèche ont la même composition à l'exception de la quantité d'agent de palatabilité contenue dans ceux-ci ; et
dans lequel les agents de palatabilité sont sélectionnés parmi des arômes de réaction, des arômes synthétiques, des acides organiques et non organiques et des sels de ces derniers, des protéines végétales hydrolysées, des protéines animales hydrolysées, des hydrolysats à base de tissu animal, des herbes aromatiques et des épices, des levures, et des mélanges de ces derniers.

2. Le procédé selon la revendication 1, consistant en outre à conditionner le mélange dans un contenant.

3. Le procédé selon la revendication 1, dans lequel la composition inclut un probiotique ou un prébiotique.

4. Le procédé selon la revendication 1, dans lequel l'agent de palatabilité est disposé sur la surface des morceaux.

5. Le procédé selon la revendication 1, dans lequel les morceaux sont des croquettes.

6. Le procédé selon la revendication 1, dans lequel l'animal est un chien ou un chat.

7. Le procédé selon la revendication 1, dans lequel le ou les morceaux contenant entre 0 % et 3 % d'agent de palatabilité en tout ont une dimension, une forme, une couleur ou une texture de surface différente du ou des morceaux contenant entre 5 % et 20 % d'agent de palatabilité en tout.

8. Une composition alimentaire sèche pour animaux de compagnie pouvant être obtenu par le procédé selon l'une quelconque des revendications précédentes.
